Europäisches Patentamt

European Patent Office

Office européen des brevets

(11) Veröffentlichungsnummer: **0 427 880 A1**

# (12) EUROPÄISCHE PATENTANMELDUNG

(21) Anmeldenummer: 89121021.3

(22) Anmeldetag: 13.11.89

(51) Int. Cl.5: **F16L 3/00**

(43) Veröffentlichungstag der Anmeldung:
**22.05.91 Patentblatt 91/21**

(84) Benannte Vertragsstaaten:
**BE CH DE ES FR GB IT LI NL SE**

(71) Anmelder: **Siemens Aktiengesellschaft**
**Wittelsbacherplatz 2**
**W-8000 München 2(DE)**

(72) Erfinder: **Lauer, Joachim, Dr. rer. nat.**
**Marienstrasse 11**
**W-6054 Rodgau 5(DE)**
Erfinder: **Trottnow, Peter, Dipl.-Ing.**
**J.-Wirmer-Strasse 104**
**W-6000 Frankfurt am Main 90(DE)**

(54) **Rohrhalterung und Verfahren zur Fertigung derselben.**

(57) Die Erfindung betrifft eine Rohrhalterung mit einem Oberteil (3, 10A) und einem Unterteil (2, 10B), die jeweils eine Einbuchtung (2a und 10b, 3a und 10a) aufweisen, deren Profil zumindest einem Teil des halben Querschnittsprofils des aufzunehmenden Rohres (1, 9) entspricht. Das Oberteil (3, 10A) und das Unterteil (2, 10B) sind über eine Verbindungseinrichtung (6, 7, 8) miteinander verbindbar. Die Erfindung betrifft auch ein Verfahren zur Fertigung einer solchen Rohrhalterung. Es ist vorgesehen, daß das Oberteil (3, 10A), das Unterteil (2, 10B) und ein Mittelteil (10), das eine einstückige Kombination eines Oberteiles (10A) und eines Unterteiles (10B) ist, alle oder teilweise Abschnitte (11) einer profilierten Stange sind. Der Querschnitt der Stange weist über die gesamte Länge der Stange zumindest eine Einbuchtung (11a, 11b) auf, deren Profil zumindest einem Teil des halben Querschnittsprofils des aufzunehmenden Rohres (1, 9) entspricht. Zur Fertigung einer solchen Rohrhalterung werden von einer profilierten Stange Abschnitte (11) abgetrennt und es werden zumindest zwei Abschnitte (11) übereinander angeordnet und miteinander verbunden.

FIG 1

EP 0 427 880 A1

## ROHRHALTERUNG UND VERFAHREN ZUR FERTIGUNG DERSELBEN

Die Erfindung betrifft eine Rohrhalterung mit einem Oberteil und einem Unterteil, die jeweils eine Einbuchtung aufweisen, deren Profile zumindest teilweise demjenigen eines aufzunehmenden Rohres entsprechen, und die über eine Verbindungseinrichtung miteinander verbindbar sind, wobei sie dann das Rohr einschließen. Die Erfindung betrifft auch ein Verfahren zur Fertigung einer derartigen Rohrhalterung.

Eine bisher übliche Rohrhalterung ist beispielsweise aus der EP-A-0 242 584 bekannt. Falls Rohre zu verlegen sind, in denen korrosive Medien strömen, sind zunehmend Rohrhalterungen aus korrosionsbeständigem Werkstoff notwendig, da im Laufe langer Betriebszeiten die Möglichkeit eines Lecks in der Rohrleitung unterstellt wird. Ein geeigneter korrosionsbeständiger Werkstoff ist beispielsweise Edelstahl.

Edelstahl-Rohrhalterungen werden bisher aus Vollmaterial gearbeitet, oder es werden Austenitbleche durch Umformen gebogen und dann verschweißt. Eine derartige Fertigung ist zeitaufwendig und daher unwirtschaftlich.

Der Erfindung liegt die Aufgabe zugrunde, eine Rohrhalterung anzugeben, die in großer Stückzahl schnell und zuverlässig herzustellen ist. Es soll beispielsweise möglich sein, mehrere Rohre parallel übereinander zu verlegen. Auch soll ein Verfahren angegeben werden, mit dem eine solche Rohrhalterung gefertigt werden kann.

Die zuerst genannte Aufgabe wird gemäß der Erfindung dadurch gelöst, daß das Oberteil und/oder das Unterteil Abschnitte/ein Abschnitt einer profilierten Stange sind/ist.

In eine solche Rohrhalterung ist zwischen Oberteil und Unterteil, deren Einbuchtungen einander zugewandt sind, das Rohr einzufügen. Zur Arretierung des Rohres sind die beiden Halterungsteile der Rohrhalterung, das Oberteil und das Unterteil, miteinander zu verschrauben. Das Rohr ist dann zwischen den Halterungsteilen gehalten. Über ein geeignetes als solches bekanntes Mittel, wie beispielsweise eine in eine Wand eingelassene Schiene, ist die Rohrhalterung an einem Gebäude, beispielsweise an einer Wand, zu befestigen.

Mit der Rohrhalterung nach der Erfindung wird der Vorteil erzielt, daß diese in großer Stückzahl und bei weitgehend gleichbleibender Form durch einfaches Abtrennen von Halterungsteilen von einer vorgefertigten, profilierten Stange zu gewinnen ist. Dadurch sind die Fertigungskosten für eine Rohrhalterung gegenüber bekannten Rohrhalterungen deutlich reduziert. Das wirkt sich besonders bei einer Rohrhalterung aus teurem, korrosionsbeständigem Werkstoff, wie beispielsweise Edelstahl, aus.

Beispielsweise weist das Oberteil oder das Unterteil oder weisen beide einen x-förmigen Querschnitt auf. Dabei entspricht das Profil der oberen oder der unteren Einbuchtung zumindest einem Teil des halben Querschnittsprofils des zu haltenden Rohres. Das kann auch für beide Einbuchtungen zutreffen. Die seitlichen Einbuchtungen können ein beliebiges Profil haben. Ein solches x-förmiges Halterungsteil eignet sich besonders zum Abstützen eines Rohres auf einer Wand. Während die dem Rohr zugewandten Äste des x-förmigen Halterungsteils Mittel der Verbindungseinrichtung zum Befestigen eines weiteren Halterungsteils aufnehmen, nehmen die dem Rohr abgewandten Äste Mittel zur Befestigung des Halterungsteils an einem Träger, beispielsweise an einer Gebäudewand, auf. Die genannten Mittel können beispielsweise Schraubverbindungen sein.

Beispielsweise sind das Oberteil für ein erstes Rohr und das Unterteil für ein zweites Rohr miteinander kombiniert und ein Mittelteil bildend einstückig ausgeführt. Es entsprechen also bei einem solchen einstückigen Halterungsteil die Profile sowohl einer oberen als auch einer unteren Einbuchtung zumindest einem Teil des halben Querschnittsprofils des zu haltenden Rohres. Ein solches Halterungsteil kann beidseitig jeweils ein Rohr aufnehmen. Es ist besonders vorteilhaft einsetzbar, wenn über eine Leitungstrasse mehrere parallele Rohre zu verlegen sind. Dann erfolgt die Abstützung des ersten Rohres auf einer Wand, beispielsweise mit dem zuvor geschilderten, ersten Halterungsteil, dem Unterteil. Auf dieses Halterungsteil ist das Rohr mit einem weiteren, zweiten Halterungsteil, das eine beidseitige angepaßte Einbuchtung aufweist, anpreßbar. Dabei liegt die untere Einbuchtung am Rohr an. Die obere Einbuchtung dient zur Aufnahme eines weiteren Rohres, das dann mit einem zusätzlichen dritten Halterungsteil, dem Oberteil, arretiert wird. Zwischen dem zweiten und dem ersten Halterungsteil und zwischen dem dritten und dem zweiten Halterungsteil sind beispielsweise Schraubverbindungen vorgesehen.

Durch Übereinandersetzen mehrerer solcher, beispielsweise x-förmiger Halterungsteile können beispielsweise auch mehr als zwei Rohre übereinander gehalten werden. Dadurch können vorteilhaft auf einfache Weise mehrere übereinander angeordnete Rohrleitungen platzsparend verlegt werden.

Beispielsweise ist das Oberteil oder das Unterteil der Rohrhalterung als Schelle ausgebildet. Eine solche Schelle ist beispielsweise ein Abschnitt einer profilierten Stange, deren Querschnitt der unteren Hälfte eines x-förmigen Querschnittes entspricht, wobei das Profil der Einbuchtung zumindest einem Teil des halben Querschnittsprofils des zu haltenden Rohres entspricht. Ein solches Oberteil oder Unterteil benötigt zu seiner Herstellung wenig Material. Es ist besonders geeignet zur Kombination mit einem der zuvor beschriebenen x-förmigen Halterungsteile. Dabei kann ein x-förmiges Halterungsteil als Unterteil auf einer die Rohrleitung haltenden Struktur, beispielsweise auf einer Gebäudewand, befestigt sein. Auf diesem Unterteil ruht das Rohr. Gehalten wird das Rohr dann durch das Oberteil, das einem halben x-förmigen Halterungsteil oder einer Schelle entspricht. Ein solches Oberteil kann auch den oberen Abschluß einer Anordnung aus abwechselnd mehreren x-förmigen Halterungsteilen und Rohren bilden.

Falls die Einbuchtung in einem Halterungsteil genau dem halben Querschnittsprofil des zu haltenden Rohres entspricht, berühren sich einander gegenüberliegende Anformungen von zwei ein Rohr haltenden Halterungsteilen. Zur Arretierung des Rohres sind diese sich berührenden Anformungen, die insbesondere parallel verlaufen, miteinander zu verschrauben oder auf andere geeignete Weise fest miteinander zu verbinden.

Beispielsweise entspricht aber das Profil der Einbuchtung eines Halterungsteils nur einem Teil des Querschnittsprofils des zu haltenden Rohres. Dann sind zur Vervollständigung der Rohrhalterung zwischen insbesondere parallel verlaufenden Anformungen von zwei ein Rohr haltenden Halterungsteilen Abstandshalter als Teil der Verbindungseinrichtung eingefügt. Die Halterungsteile und die Abstandshalter sind durch geeignete Mittel, in der Regel durch Schrauben, zu verbinden.

Die Abstandshalter können so dimensioniert sein, daß das Rohr fest arretiert werden kann. Die Abstandshalter können auch so dimensioniert sein, daß zwischen einer Rohrhalterung und dem Rohr ein Spalt frei bleibt. Mit derartigen Rohrhalterungen wird der Vorteil erzielt, daß das Rohr entweder in allen drei Koordinatenachsen unbeweglich gehalten sein kann, oder aber in Richtung der Rohrachse frei beweglich und senkrecht zur Rohrachse in der Bewegung begrenzt gehalten sein kann. Man benötigt also keine unterschiedlichen Halterungsteile sondern nur unterschiedlich lange Abstandshalter, um zwei verschiedene Rohrhalterungstypen bereitstellen zu können. Der erste Typ bildet einen Festpunkt, der keine Bewegung einer Rohrleitung zuläßt. Der zweite Typ bildet eine Rohrhalterung, die eine unbehinderte Bewegung der Rohrleitung in der Richtung der Rohrachse zuläßt. Dadurch sind Wärmedehnungen des Rohres ohne Einfluß auf die Stabilität der Rohrhalterung. Hingegen läßt der zweite Typ Bewegungen der Rohrleitung in einer anderen Richtung weitgehend nicht zu.

Die Abstandshalter können Hülsen sein, durch die hindurch verlaufend geeignet lange Schrauben angeordnet sind, die benachbarte Halterungsteile der Rohrhalterung miteinander verbinden. Die Schrauben sind jeweils durch Muttern gehalten.

Die Rohrhalterung, insbesondere Oberteil und/oder Unterteil, besteht, beispielsweise aus korrosionsbeständigem Werkstoff, insbesondere aus Edelstahl. Solche Rohrhalterungen sind besonders dann erforderlich, wenn eine korrodierende Atmosphäre vorliegt, oder wenn aus einer Rohrleitung eine korrodierende Flüssigkeit austreten könnte.

Die Rohrhalterung ist auf Träger aufschweißbar oder aufschraubbar. Diese Träger sind in der Regel fest in eine Wand aus Beton eingebunden. Geeignete Träger sind Platten oder Schienen. Die Rohrhalterung kann aber auch auf eine andere geeignete Weise, beispielsweise mit Dübeln, an einer Wand oder einem anderen Gebäudeteil befestigt sein. Auch kann sie an einem Stahlträger angeschweißt oder angeschraubt sein.

Die Aufgabe ein Verfahren zur Fertigung einer gemäß der Erfindung ausgebildeten Rohrhalterung anzugeben, wird gemäß der Erfindung dadurch gelöst, daß von einer profilierten Stange, deren Querschnitt über ihre gesamte Länge mindestens eine Einbuchtung aufweist, deren Profil zumindest einem Teil des halben Querschnittsprofils des zu haltenden Rohres entspricht, ein Abschnitt abgetrennt wird, und daß dieser Abschnitt als Unterteil, Mittelteil und/oder Oberteil mit einem Oberteil und/oder Unterteil übereinander angeordnet verbunden wird.

Beispielsweise werden zwei oder mehrere solche Abschnitte miteinander verbunden. Es können auch zumindest zwei gleiche Abschnitte miteinander verbunden werden.

Das Fertigen einer profilierten Stange bedarf nur eines relativ einfachen Arbeitsganges. Aus dieser Stange erhält man mit dem Verfahren nach der Erfindung eine große Anzahl Abschnitte, die als Halterungsteile einzusetzen sind. Der Arbeitsaufwand pro Halterungsteil ist damit sehr gering, wodurch auch die Kosten niedrig sind. Mit dem geschilderten Verfahren können x-förmige Halterungsteile, Halterungsteile mit halbem x-förmigem Querschnitt (Schellenform) oder auch Halterungsteile mit jeder anderen gewünschten Form hergestellt werden.

Zur Fertigung einer Rohrhalterung werden Abschnitte, je nach ihrer Form, direkt oder über Abstandshalter miteinander verbunden.

Ein geeignetes Verfahren zum Herstellen einer profilierten Stange ist das Warmfließpreßverfahren, das besonders kostengünstig ist.

Mit der Rohrhalterung und mit dem Verfahren zur Fertigung einer Rohrhalterung gemäß der Erfindung wird insbesondere der Vorteil erzielt, daß mit wenig Material und in kurzer Fertigungszeit eine zuverlässige Rohrhalterung, die aus Edelstahl bestehen kann, zur Verfügung gestellt wird, die außerdem zum Halten mehrerer übereinander angeordneter Rohre geeignet ist.

Eine Rohrhalterung nach der Erfindung und ein Verfahren zum Herstellen einer solchen Rohrhalterung wird anhand der Zeichnung näher erläutert:

FIG 1 zeigt eine Rohrhalterung mit einem x-förmigen Unterteil und einem Oberteil.

FIG 2 zeigt zwei übereinander angeordnete Rohre, die mit drei Halterungsteilen gehalten sind.

FIG 3 zeigt in perspektivischer Darstellung ein x-förmiges Teil einer Rohrhalterung, das von einer profilierten Stange abgeschnitten wurde.

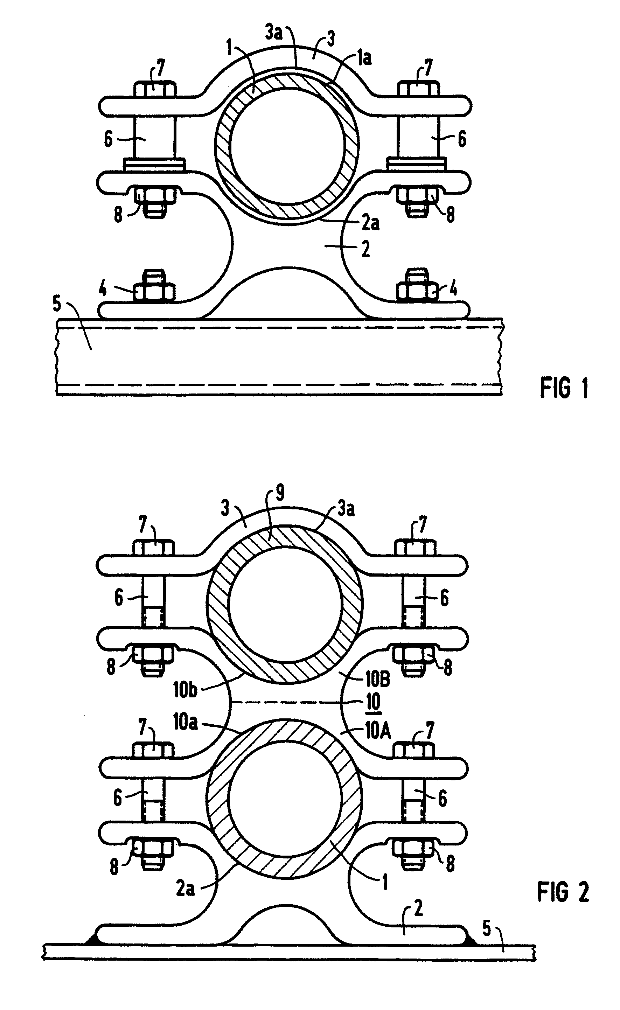

Eine Rohrhalterung für ein Rohr 1 nach Figur 1 besteht aus einem Unterteil 2 und einem Oberteil 3. Das Unterteil 2 ist mit Schrauben 4 auf einem Träger 5 aufgeschraubt, der in einer Wand eingelassen sein kann. Das Unterteil 2 nach Figur 1 hat einen x-förmigen Querschnitt, wobei die obere Einbuchtung 2a ein Profil aufweist, das einem Teil des halben Querschnittsprofils des zu haltenden Rohres 1 entspricht. In der Ausnehmung 2a ruht das Rohr 1. Arretiert ist das Rohr 1 mittels des Oberteils 3 der Rohrhalterung. Das Oberteil 3 entspricht in seiner Form einer Schelle oder der unteren Hälfte des x-förmigen Unterteils 2. Auch das Oberteil 3 weist eine Einbuchtung 3a auf, deren Profil einem Teil des halben Querschnittsprofils des Rohres 1 entspricht. Das Oberteil 3 überdeckt nach Figur 1 das Rohr 1. Zur Arretierung des Rohres 1 sind Unterteil 2 und Oberteil 3 miteinander verschraubt. Dazu sind zwischen einander parallelen Anformungen des Unterteils 2 und des Oberteils 3 hülsenförmige Abstandshalter 6 angeordnet, durch die Schrauben 7, die mit Muttern 8 versehen sind, hindurchgeführt sind. Die Länge der Abstandshalter 6 entspricht dem Abstand zwischen den Anformungen des Unterteils 2 und des Oberteils 3. Soll eine Bewegung des Rohres 1 in Richtung seiner Achse möglich sein, dann sind die Abstandshalter 6 etwas länger zu wählen als der Abstand zwischen den Anformungen des Unterteils 2 und des Oberteils 3. Dann bleibt zwischen dem Rohr 1 und der Rohrhalterung ein Spalt 1a frei.

Nach Figur 2 sind zwei Rohre 1 und 9, die parallel verlaufen, übereinander angeordnet. Zur Halterung der beiden Rohre 1 und 9 dienen drei Halterungsteile, das Unterteil 2, das Oberteil 3 und ein Mittelteil 10. Das Mittelteil 10 entspricht einer einstückigen Kobination aus einem Oberteil 10A und einem Unterteil 10B. Das Unterteil 2 entspricht der Ausführungsform nach Figur 1. Es ist jedoch auf einem Träger 5 aufgeschweißt. Es kann jedoch auch aufgeschraubt sein, genauso wie das Unterteil 2 nach Figur 1 aufgeschweißt sein kann. Das Unterteil 2 nach Figur 2 trägt in seiner Einbuchtung 2a das erste Rohr 1. Oberhalb des ersten Rohres 1 ist das Mittelteil 10 angeordnet. Dieses hat wie das Unterteil 2 einen x-förmigen Querschnitt. Dabei entspricht das Profil der unteren Einbuchtung 10a einem Teil des halben Querschnittsprofils des ersten Rohres 1. Das Profil der oberen Einbuchtung 10b entspricht einem Teil des halben Querschnittsprofils des zweiten Rohres 9. Während das Mittelteil 10 mit Hilfe von Abstandshaltern 6, Schrauben 7 und Muttern 8 das untere, erste Rohr 1 auf dem Unterteil 2 arretiert, nimmt es in seiner oberen Einbuchtung 10b das obere, zweite Rohr 9 auf. Das obere Rohr 9 ist auf dem Mittelteil 10 genauso arretiert, wie nach Figur 1 das Rohr 1 auf dem Unterteil 2 arretiert ist. Zur Arretierung dient das Oberteil 3 in Verbindung mit weiteren Abstandshaltern 6, Schrauben 7 und Muttern 8. Die Länge der Abstandshalter 6 kann den Bedürfnissen entsprechend gewählt sein.

Durch Verwendung mehrerer Mittelteile 10 kann auch eine Rohrhalterung für mehr als zwei Rohre 1, 9 gebildet werden. Das Unterteil 2 kann baugleich mit dem Mittelteil 10 sein. Auch kann das Oberteil 3 mit dem Mittelteil 10 baugleich sein. Dann werden für den Aufbau einer Rohrhalterung statt drei verschiedener Halterungsteile 2, 3, 10 nur zwei verschiedene Halterungsteile 3, 10 oder sogar nur ein Typ eines Halterungsteils 10 benötigt. Die Fertigung der Halterungsteile kann dadurch rationalisiert werden.

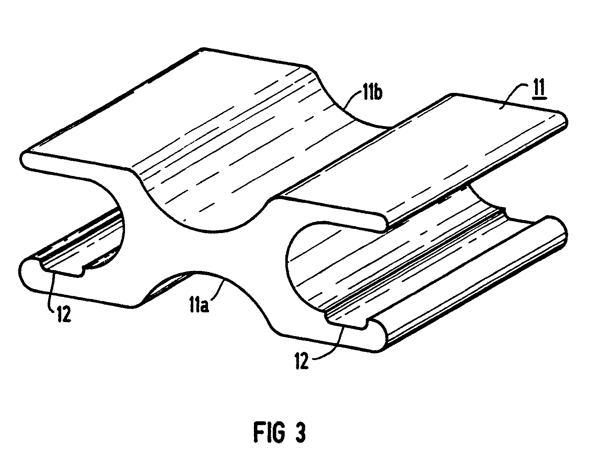

Zur Herstellung eines Halterungsteils 2, 3, 10 wird zunächst eine profilierte Stange gefertigt, deren Querschnitt über ihre gesamte Länge gleichbleibend dem Querschnitt des gewünschten Halterungsteils 2, 3, 10 entspricht. Sie weist Einbuchtungen 11a und 11b auf, die den gewünschten Einbuchtungen 2a, 3a, 10a, 10b entsprechen. Von dieser Stange werden dann Abschnitte 11 abgetrennt, die die Halterungsteile 2, 3, 10 bilden. Ein solcher Abschnitt 11 einer profilierten Stange ist in Figur 3 perspektivisch dargestellt. Der Abschnitt 11 nach Figur 3 ist als Mittelteil 10 nach Figur 2 einsetzbar. Entsprechend können Abschnitte einer geeignet profilierten Stange als Unterteile 2 oder als Oberteile 3 dienen. Der Abschnitt 11 weist an seinen beidseitig paarweise parallel zueinander angeordneten Anformungen Längsrinnen 12 auf, die ein Anbringen von Schrauben erleichtern.

Die Abschnitte 11 einer profilierten Stange sind mit wenig Material sehr schnell und damit kostengünstig herstellbar. Es steht damit eine einfach montierbare, kostengünstige Rohrhalterung zur Verfügung.

## Ansprüche

1. Rohrhalterung mit einem Oberteil (3, 10A) und einem Unterteil (2, 10B), die jeweils eine Einbuchtung (2a, 3a, 10a, 10b) aufweisen, deren Profile zumindest teilweise demjenigen eines aufzunehmenden Rohres (1, 9) entsprechen, und die über eine Verbindungseinrichtung (6, 7, 8) miteinander verbindbar sind, wobei sie dann das Rohr (1, 9) einschließen, **dadurch gekennzeichnet,** daß das Oberteil (3, 10A) und/oder das Unterteil (2, 10B) Abschnitte/ein Abschnitt einer profilierten Stange sind/ist.

2. Rohrhalterung nach Anspruch 1,
**dadurch gekennzeichnet,** daß das Oberteil (3, 10 A) und/oder das Unterteil (2, 10B) einen x-förmigen Querschnitt aufweisen/aufweist.

3. Rohrhalterung nach Anspruch 1 oder 2,
**dadurch gekennzeichnet,** daß das Oberteil (10A) für ein erstes Rohr (1) und das Unterteil (10B) für ein zweites Rohr (9) ein einstückiges Mittelteil (10) bildend ausgeführt sind.

4. Rohrhalterung nach einem der Ansprüche 1 bis 3,
**dadurch gekennzeichnet,** daß das Oberteil (3) oder das Unterteil (2) als Schelle ausgebildet ist.

5. Rohrhalterung nach einem der Ansprüche 1 bis 4,
**dadurch gekennzeichnet,** daß zur Halterung mehrerer übereinander angeordneter Rohre (1, 9) mehrere Halterungsteile, ein Unterteil (2) und mehrere Mittelteile (10) mit x-förmigem Querschnitt übereinander angeordnet und miteinander verbunden sind.

6. Rohrhalterung nach Anspruch 5,
**dadurch gekennzeichnet,** daß das auf dem obersten x-förmigen Halterungsteil (2, 10) angeordnete Oberteil (3) als Schelle ausgebildet ist.

7. Rohrhalterung nach einem der Ansprüche 1 bis 6,
**dadurch gekennzeichnet,** daß das Profil der Einbuchtung (2a, 3a, 10a, 10b) dem halben Querschnittsprofil des zu haltenden Rohres (1, 9) entspricht.

8. Rohrhalterung nach einem der Ansprüche 1 bis 6,
**dadurch gekennzeichnet,** daß das Profil der Einbuchtung (2a, 3a, 10a, 10b) nur einem Teil des halben Querschnittsprofils des zu haltenden Rohres (1, 9) entspricht, und daß die Verbindungseinrichtung (6, 7, 8) einen Abstandshalter (6) umfaßt.

9. Rohrhalterung nach einem der Ansprüche 1 bis 8,
**dadurch gekennzeichnet,** daß die Verbindungseinrichtung (6, 7, 8) so einstellbar ist, daß zwischem dem Rohr (1, 9) und dem Oberteil (3, 10A) und/oder dem Unterteil (2, 10B) ein Spalt (1a) einstellbar ist.

10. Rohrhalterung nach einem der Ansprüche 1 bis 9,
**dadurch gekennzeichnet,** daß das Oberteil (3, 10A) und/oder das Unterteil (2, 10B) aus einem korrosionsbeständigen Werkstoff, insbesondere aus Edelstahl, besteht.

11. Rohrhalterung nach einem der Ansprüche 1 bis 10,
**dadurch gekennzeichnet,** daß sie auf einem Träger (5) aufgeschweißt oder aufgeschraubt ist.

12. Rohrhalterung nach einem der Ansprüche 1 bis 11,
**dadurch gekennzeichnet,** daß das Oberteil (3, 10A) und/oder das Unterteil (2, 10B) eine Längsrinne (12) zur Befestigung enthält.

13. Verfahren zur Fertigung einer Rohrhalterung nach einem der Ansprüche 1 bis 12,
**dadurch gekennzeichnet,** daß von einer profilierten Stange, die über ihre gesamte Länge mindestens eine Einbuchtung (11a, 11b) aufweist, deren Profil zumindest einem Teil desjenigen des zu haltenden Rohres (1, 9) entspricht, ein Abschnitt (11) abgetrennt wird, und daß dieser Abschnitt (11) als Unterteil (2), Mittelteil (10) und/oder Oberteil (3) mit einem Oberteil (3, 10A) und/oder Unterteil (2, 10B) übereinander angeordnet verbunden wird.

14. Verfahren nach Anspruch 13,
**dadurch gekennzeichnet,** daß zumindest zwei gleiche Abschnitte (11) miteinander verbunden werden.

15. Verfahren nach Anspruch 13 oder 14,
**dadurch gekennzeichnet,** daß der Abschnitt (11) über Abstandshalter (6) verbunden wird.

16. Verfahren nach einem der Ansprüche 13, 14 oder 15,
**dadurch gekennzeichnet,** daß die profilierte Stange nach dem Warmfließpreßverfahren gefertigt ist.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | EP-A-0242584 (SIEMENS AG) <br> * Figur 3 * <br> --- | 1 | F16L3/00 |
| A | US-A-4076281 (DAVIS) <br> --- | | |
| A | STAUFF-SCHELLEN, "die ideale Rohrbefestigung" <br> Walter Stauffenberg KG <br> Werdohl (DE), Juni 1978 <br> ----- | | |
| | | | **RECHERCHIERTE SACHGEBIETE (Int. Cl.5 )** <br><br> F16L |

Der vorliegende Recherchenbericht wurde für alle Patentansprüche erstellt

| Recherchenort | Abschlußdatum der Recherche | Prüfer |
|---|---|---|
| BERLIN | 17 JULI 1990 | SCHAEFFLER C.A.A. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
   Dokument